# EUROPÄISCHE PATENTSCHRIFT

(11) **EP 2 268 545 B1**
(45) Veröffentlichungstag und Bekanntmachung des Hinweises auf die Patenterteilung: **02.10.2013**
(21) Anmeldenummer: 09731908.1
(22) Anmeldetag: 15.04.2009
(51) Int. Cl.: B64C 21/04, B64D 15/04, B64D 13/06

(54) **ENTEISUNGSSYSTEM FÜR EIN FLUGZEUG**
DE-ICING SYSTEM FOR AN AIRPLANE
SYSTÈME DE DÉGIVRAGE POUR UN AVION

(30) Priorität: 16.04.2008 DE 102008019146; 16.04.2008 US 124379
(43) Veröffentlichungstag der Anmeldung: 05.01.2011
(73) Patentinhaber: Airbus Operations GmbH, 21129 Hamburg (DE)
(72) Erfinder: STOLTE, Ralf-Henning, 22525 Hamburg (DE); WOLLRAB, Uwe, 29614 Soltau (DE)
(74) Vertreter: Kopf, Korbinian Paul
(86) Internationale Anmeldenummer: PCT/EP2009/054451
(87) Internationale Veröffentlichungsnummer: WO 2009/127652

(56) Entgegenhaltungen:
- EP-A- 0 888 966
- WO-A-2006/058774
- US-A- 2 777 301
- US-A- 4 482 114

## Beschreibung

### Gebiet der Erfindung:

Die Erfindung betrifft ein Enteisungssystem für ein Flugzeug mit mindestens einem Luftabgabemittel und einer Wärmequelle.

### Technologischer Hintergrund der Erfindung:

Flugzeuge, insbesondere größere Passagierflugzeuge, müssen aus einer Vielzahl von Gründen in bestimmten Flugphasen und am Boden enteist werden. Einfrieren bzw. Festfrieren von Klappen und anderen beweglichen Teilen sowie Eisansatz am Flügelprofil verschlechtert die aerodynamischen Eigenschaften deutlich und erhöht das Gewicht des betreffenden Flugzeugs, so dass Eisbildung im Flug verhindert und bereits angesetztes Eis eines am Boden befindlichen Flugzeugs entfernt werden muss. Diese beiden Vorgänge werden üblicherweise mit "De-Icing" (Eisbeseitigung) und "Anti-Icing" (Eisansatzverhinderung) bezeichnet. Im folgenden wird insbesondere das Anti-Icing betrachtet, woraus jedoch keine Beschränkung der Erfindung auf Anti-Icing folgt.

Verschiedene Varianten von Anti-Icing-Systemen haben sich im Stand der Technik durchgesetzt. Unter anderem wird beispielsweise aus den Triebwerken entnommene Zapfluft über eine perforierte Rohrleitung in das Innere von Flügelvorderkanten eingeleitet, um die Flügelvorderkante aufzuheizen und das Festfrieren von Kondenswassertröpfchen zu verhindern. Andere Systeme heizen die Flügelvorderkanten oder andere kritischen Bereiche mittels elektrisch betriebener Heizgeräte auf. Dabei muss zum Schutz der verwendeten Materialien auf Temperaturlimits geachtet werden. Dies ist im Bodenbetrieb besonders kritisch, denn die elektrisch beheizten Flächen werden nicht gleichzeitig durch Flugwind gekühlt. Nachteilig bei den vorbekannten Enteisungsverfahren ist besonders die Tatsache, dass Zapfluft und/oder elektrischer Strom von den Triebwerken für das Enteisungssystem zur Verfügung gestellt werden muss. Die Entnahme von Zapfluft vermindert die Wirtschaftlichkeit des Flugzeugs, da zusätzlich Luft aus der Umgebung abgesaugt und verdichtet wird, was sich in einem höheren Treibstoffverbrauch bemerkbar macht. Die Entnahme einer relativ großen Menge elektrischer Energie aus den Generatoren der Triebwerke vergrößert deren aufzubringende Wellenleistung, was sich ebenfalls in einem höheren Treibstoffverbrauch niederschlägt.

US-A-4 482 114 offenbart, Zapfluft aus einem Triebwerk zu entnehmen, von der ein Teil durch einen indirekten und ringförmig ausgestalteten Wärmetauscher geleitet wird. Die dadurch gekühlte Luft wird mit heißer komprimierter Luft gemischt, wobei ein Teil hiervon zu einem Enteisungssystem geleitet wird und ein anderer Teil für ein Klimatisierungssystem verwendet wird.

EP-A-0 888 966 zeigt ein Klimatisierungssystem, bei dem Kabinenluft durch einen Wärmetauscher geleitet wird, um Zapfluft zu kühlen oder durch eine Turbine strömt, so dass eine Entspannung und Kühlung erfolgt, wobei die Turbine einen Kompressor antreiben könnte, der Luft in die Kabine fördert. Eine zweite, zapfluftgetriebene Turbine könnte zusätzliche Energie zum Antreiben des Kompressors liefern. Eine Enteisungsfunktion könnte durch Luft bewerkstelligt werden, die aus einem Vorkühler wieder entweicht.

US-A-2 777 301 zeigt ein Klimatisierungssystem, bei dem im Wesentlichen Zapfluft zur Enteisung verwendet wird.

WO 2006/058774 A zeigt ein Versorgungssystem eines Flugzeugs, das mit einer Brennstoffzelle gekoppelt sein könnte, so dass Abfallprodukte der Brennstoffzelle zur Enteisung verwendet werden.

### Zusammenfassung der Erfindung:

Die Aufgabe der Erfindung ist daher, ein Enteisungssystem vorzuschlagen, das möglichst keine zusätzliche Zapfluftentnahme notwendig macht und möglichst auch ohne größere Mengen elektrischer Energie eine zuverlässige Enteisung bereitstellen kann.

Die Aufgabe wird durch ein Enteisungssystem für ein Flugzeug mit den Merkmalen des unabhängigen Anspruchs 1 gelöst. Vorteilhafte Weiterbildungen sind den Unteransprüchen zu entnehmen.

Bei dem erfindungsgemäßen Enteisungssystem wird Abluft aus einer Flugzeugkabine mittels einer Wärmequelle aufgeheizt und zu den zu enteisenden Bereichen des Flugzeugs geleitet. Der beim Ausleiten der erwärmten Luft an den gefährdeten Bereichen und der damit verbundene Wärmestrom verhindert wirksam die Eisakkumulation. Als Wärmequelle werden jedoch statt zusätzlicher Geräte im Wesentlichen solche Systeme verwendet, die ohnehin bereits Abwärme erzeugen, die ansonsten mittels Kühlsystemen in die Umgebung abgeführt werden müsste. Als eines von vielen denkbaren Beispielen könnte etwa eine in einem moderneren Flugzeug vorhandene oder vorgesehene Brennstoffzelle dienen, die elektrischen Strom erzeugt und dabei stetig Wärme abgibt. Die Temperaturen einer solchen Brennstoffzelle erreichen nicht die Grenztemperaturen der eingesetzten Materialien der zu enteisenden Flächen. Auch könnten die Flügel als Wärmesenke einen Beitrag zur Kondensation des Wassers aus der Brennstoffzelle leisten.

Zum Transport dieser Abwärme zu den zu enteisenden Bereichen des Flugzeugs kann als Wärmeträger Kabinenabluft vorgesehen werden, die durch die Abwärme aufgeheizt wird. Der Vorteil hierbei ist, dass auch gleichzeitig das Abwärme produzierende System - also etwa die Brennstoffzelle - gekühlt wird. Es sind neben der Brennstoffzelle eine Vielzahl anderer Systeme vorstellbar, die eine ausreichende Menge an Abwärme erzeugen. Darunter fallen im Besonderen auch Rechner, Computer, Steuerungsgeräte (zusammengefasst als "avionische Geräte"), die üblicherweise an einem Ort innerhalb des Flugzeugs in Racks untergebracht einen konzentrierten Abwärmestrom erzeugen. Ein weiterer Vorteil bei der Verwendung der Kabinenluft ist, dass der Druck der Kabine weiterverwendet werden kann. Heutzutage wird die Druck-Energie über das Out Flow Valve über Bord gegeben, wobei zumindest ein Teil davon in Schub umgesetzt wird. Optional können zusätzliche Gebläse bzw. Kompressoren für das erfindungsgemäße Enteisungssystem verwendet werden.

Besonders vorteilhaft an dem erfindungsgemäßen Enteisungssystem ist demnach, dass weder zusätzliche Zapfluftentnahme aus den Triebwerken noch eine hohe elektrische Energieentnahme zum Enteisen notwendig ist. Dies hat zur Folge, dass die Triebwerke effizienter und mit einem geringeren Treibstoffverbrauch betrieben werden können als im Stand der Technik. Als weitere Vorteile ist besonders die Tatsache zu nennen, dass verschiedene Abwärme produzierende Systeme beim Enteisen automatisch gekühlt werden, wodurch ein üblicherweise vorgesehenes Kühlsystem entsprechend schlanker dimensioniert werden kann, was erneut dem Treibstoffverbrauch bzw. der Gewichtseinsparung des Flugzeugs zu Gute kommt.

Ein weiterer Vorteil des erfindungsgemäßen Enteisungssystems ist beispielsweise, dass die zeit- und kostenaufwendigen Enteisungsprozeduren am Boden entfallen oder deutlich reduziert werden können und damit den Betrieb für die betreffende Fluggesellschaft verbessern, die Pünktlichkeit des Flugzeugs zu erhöhen und die Umweltbelastung durch Einsparen von Enteisungsflüssigkeit reduzieren. Dies begründet sich dadurch, dass die heute verwendete flugzeugseitige Enteisung nur im Fluge verwendet werden kann, da die Triebwerkszapfluft mit einer Temperatur von etwa 200°C den Flügel durchströmt und am Boden ohne kühlende Einwirkung von kalter Luft aus der Umgebung zu einer Überschreitung der zulässigen Flügelstruktur-Temperatur führen würde. Die durch das erfindungsgemäße Enteisungssystem vorgeschlagene Lösung arbeitet bevorzugt mit geringeren Temperaturen und führt daher auch am Boden nicht zu kritischen Temperaturen, so dass eine prinzipielle Einsetzbarkeit dieses Systems am Boden gewährleistet werden kann. Ein weiterer Vorteil ist, dass der Flügelwiderstand auch während des Reiseflugs und/oder bei Start und Landung verringert bzw. der Auftrieb erhöht werden kann. Dies wird dadurch ermöglicht, dass durch die geeignete permanente Durchströmung des Flügels mit Abluft eine widerstandsreduzierende und/oder auftriebserhöhende Grenzschichtbeeinflussung ermöglicht wird.

In einer vorteilhaften Weiterbildung des erfindungsgemäßen Enteisungssystems wird zumindest ein Großteil der anfallenden Kabinenabluft durch Abwärme aufgewärmt in die Flügel geleitet, um dort zur Enteisung verwendet zu werden und schließlich in jeweils einem Endbereich der Flügel durch Abflussventile das Flugzeug zu verlassen. Die Abflussventile sind dabei bevorzugt so angeordnet, dass aus der abströmenden Kabinenabluft auch ein Vortrieb erzeugt werden kann. Dadurch können im Gegenzug zumindest bereichsweise an der Rumpfunterseite Kabinenluft-Abflussventile eingespart werden.

### Kurze Beschreibung der Zeichnungen:

Die Erfindung wird nachfolgend anhand von Figuren näher erläutert. In den Figuren stehen gleiche Bezugszeichen für gleiche Objekte. Es zeigen:
   Fig. 1a-b: Enteisungssystem aus dem Stand der Technik;
   Fig. 2: erfindungsgemäßes Enteisungssystem in schematischer Ansicht.

### Detaillierte Beschreibung eines exemplarischen Ausführungsbeipiels:

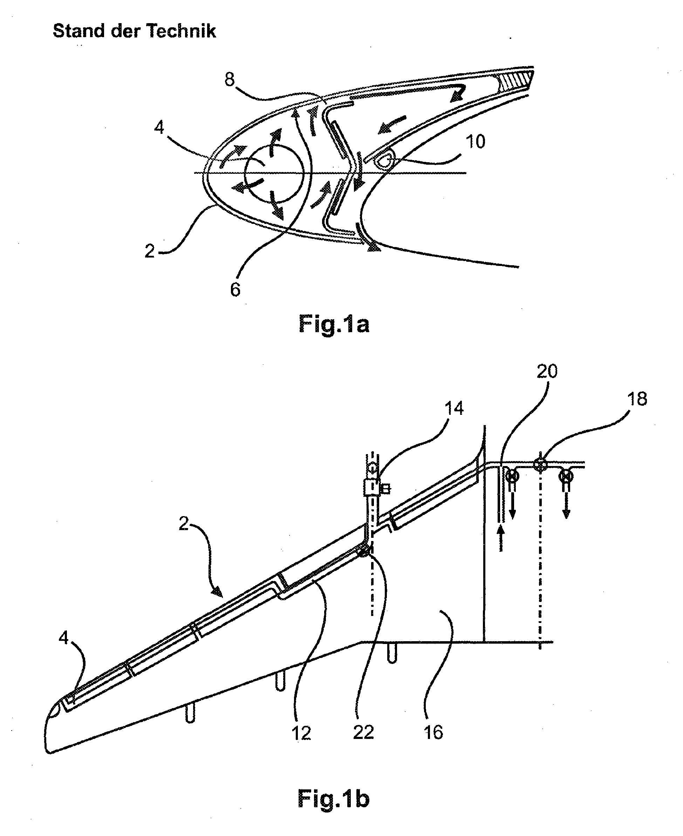

In Fig. 1a wird schematisch ein verbreitetes System zum Enteisen eines Flugzeugflügels im Stand der Technik gezeigt. In einer Flügelvorderkante 2 befindet sich eine perforierte Rohrleitung 4 (auch "Piccolo-Tube" genannt), durch die warme Luft ausströmt und an die Innenseite 6 der Flügelvorderkante 2 prallt, um durch den Wärmeeintrag dort eine Eisakkumulation zu verhindern. In dem dargestellten Beispiel in Fig. 1a handelt es sich bei der Flügelvorderkante 2 um die Vorderkante einer Flügelvorderkantenklappe (auch "Slat" genannt). Innerhalb dieser Flügelvorderkantenklappe kann die zur Vorderkante 2 ausgeleitete warme Luft durch verschiedene Kanäle 8 auch in zur Flugrichtung rückwärtige und weiter zur Flügeloberseite gerichtete Bereiche strömen und so auch Dichtungspaarungen 10 von Eis freihalten. Bei tangentialer Ausströmung der warmen Luft würde die Ausblasung bevorzugt hinter der Ablösungsschicht realisiert.

In Fig. 1b wird der Zusammenhang zwischen den perforierten Rohrleitungen 4 und einer Luftquelle vorgestellt, wie er im Stand der Technik verwendet wird. Entlang der Flügelvorderkante 2 befinden sich mehrere perforierte Rohrleitungen 4, die mit einem Leitungssystem 12 verbunden sind, welches wiederum mit mindestens einem Triebwerk zum Entnehmen von Zapfluft verbunden ist. Dabei gibt es bevorzugt für jedes Triebwerk eine Zapfluftentnahmestelle 14, die an beiden Flügeln 16 des Flugzeugs positioniert sind und über ein sogenanntes "Cross Bleed Valve" 18 ihre Luft separat oder gemeinsam in das Leitungssystem 12 abgeben. Weiterhin besteht die Möglichkeit, aus einem Hilfstriebwerk Luft über eine Einspeisungsstelle 20 in das Leitungssystem 12 zu leiten. Ebenso befindet sich in jedem Flügel 16 ein Ventil 22, das den Enteisungsluftstrom öffnen, sperren bzw. regeln kann.

Das Enteisungssystem aus dem Stand der Technik, wie es in den Figuren 1a und 1b vorgestellt ist, wird aufgrund der wirtschaftlich unvorteilhaften Entnahme von Zapfluft aus den Triebwerken nur in den eisanfälligen Flugphasen, das heißt insbesondere in den Start- und Landephasen verwendet. Während des Reiseflugs und am Boden bleibt das Enteisungssystem vorwiegend ausgeschaltet. Da die aus den Triebwerken entnommene Zapfluft eine relativ hohe Temperatur erreicht, ist ein Betrieb des Enteisungssystems am Boden auch nicht sinnvoll, da sich das Flugzeug - im Vergleich zum normalen Reiseflug - in einer relativ warmen Umgebung befindet, so dass eine Enteisungsluft mit hoher Temperatur leicht den zulässigen Temperaturgrenzwert der enteisten Struktur überschreitet. Im Flug wird jedoch durch die den Flügel umströmende kalte Umgebungsluft die zu enteisende Struktur derart gekühlt, dass auch das Einwirken der Enteisungsluft mit hoher Temperatur nicht zu einer Überschreitung der zulässigen Strukturtemperatur führt.

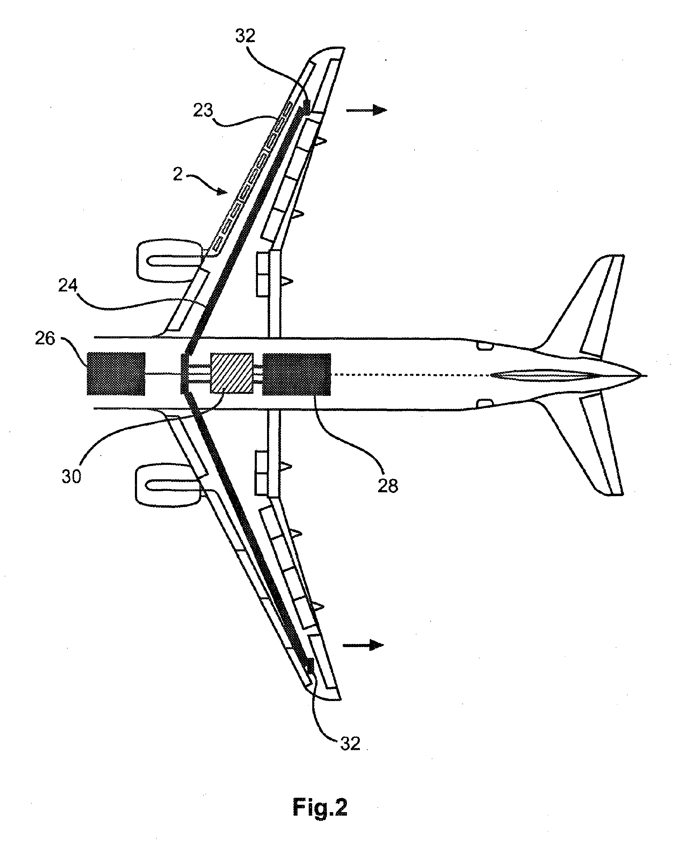

Das in Fig. 2 detaillierter dargestellte erfindungsgemäße Enteisungssystem löst dieses Problem. In den Flügeln 16 sind mehrere Luftausleitungsmittel 23 angeordnet, die beispielsweise wie im Stand der Technik als perforierte Luftleitungen ("Piccolo Tubes") ausgeführt sein können, welche erwärmte Luft insbesondere in die Flügelvorderkanten 2 leiten. Als Luftquelle dient ein Leitungssystem 24, welches Abluft aus einer Kabine des Flugzeugs bezieht. Die der Kabine zum Erhalten einer konstanten Luftqualität entnommene Abluft wird von einem Klimaanlagensystem 26 bereitgestellt und zusätzlich durch eine nachgeschaltete Wärmequelle 28 erwärmt. Diese Erwärmung wird durch eine Lufterwärmungseinrichtung 30 erreicht, die beispielsweise durch einen Wärmetauscher realisiert sein könnte, der einerseits in einem Leitungsstrang von Kabinenabluft aus der Klimaanlage 26 durchströmt wird, andererseits in einem weiteren Leitungsstrang auch beispielsweise durch die Abluft aus einem Wärme erzeugenden System als Wärmequelle 28. Eine Wärmequelle 28 könnte beispielsweise als Brennstoffzelle realisiert sein, die bereits ohnehin an Bord des Flugzeugs integriert sein könnte, um etwa die Aufgabe eines Hilfstriebwerks zu erfüllen oder zum Erzeugen eines Teils der elektrischen Energie während des Reiseflugs dient. Bei der Entnahme der Abwärme aus der Brennstoffzelle durch Wärmeübergang in die kühlere Abluft aus der Klimaanlage 26 wird gleichzeitig die Brennstoffzelle gekühlt. Dies bedeutet, dass die Notwendigkeit nach Kühlung eines Wärme abgebenden Systems und dem erforderlichen Wärmeeintrag der Enteisungsluft gemeinsam und synergetisch kombiniert werden können, um die Wirtschaftlichkeit des Flugzeugs insgesamt zu steigern.

Neben Brennstoffzellen kommen auch andere Systeme als Wärmequelle 28 in Frage, die eine ausreichende Menge an Abwärme zur Verfügung stellen. Beispielsweise könnten dies avionische Geräte sein, die konzentriert in Racks beispielsweise unter dem Cockpit des Flugzeugs oder an einer anderen geeigneten Stelle angeordnet werden und dort eine Reihe von datenverarbeitenden Aufgaben erfüllen. Üblicherweise ist die Abwärme der avionischen Geräte groß, so dass die Kühlung der avionischen Geräte durch Kabinenabluft und gleichzeitige Erwärmung der Kabinenabluft zum Enteisen des Flugzeugs gemeinsam ermöglicht wird. Gleichermaßen kann die Abwärme avionischer Geräte, von Brennstoffzellen und/oder von anderen Wärme erzeugenden Systemen auch kombiniert zur Enteisung verwendet werden.

Das Temperaturniveau des erfindungsgemäßen Enteisungssystems liegt deutlich niedriger als das eines Standard-Enteisungssystems pneumatischer Arbeitsweise aus dem Stand der Technik, denn beispielsweise können als Brennstoffzellen bevorzugt auch Niedrigtemperatur-Brennstoffzellen verwendet werden, die Abwärmetemperaturen von beispielsweise 80°C erreichen. Im Falle von kühlungsbedürftigen avionischen Geräten können Temperaturen von etwa 50 bis 80°C erreicht werden. Dieses niedrige Temperaturniveau reicht dann zur Enteisung des Flugzeugs aus, wenn ein entsprechend großer Luftvolumenstrom zur Enteisung verwendet werden kann. Da die Kabinen von größeren Passagierflugzeugen mit einer relativ großen Menge Luft beaufschlagt werden - beispielsweise werden mehrere Liter Frischluft pro Passagier und Sekunde eingeleitet und die gleiche Menge aus der Kabine abgeführt - ist beim Einsatz des erfindungsgemäßen Enteisungssystems in einem modernen Passagierflugzeug davon auszugehen, dass ausreichend Luft zur Verwendung von Systemabwärme relativ niedriger Temperatur zum Enteisen verwendet werden kann.

Die Erfindung beschränkt sich nicht auf das Entnehmen von Abwärme aus Brennstoffzellen und avionischen Geräten, sondern es ist denkbar, jegliche kontinuierlich betriebenen Geräte zur Bereitstellung von ausreichend Wärme zum Aufwärmen der Kabinenabluft in Betracht zu ziehen.

Bei der erfindungsgemäßen Enteisung findet bevorzugt ein kontinuierliches Abgeben von Luft in Richtung der Flügelvorderkante 2 statt. Da dieses Abgeben von Luft keine zusätzliche Energie an den Triebwerken erfordert und sozusagen parasitär die ohnehin entstehenden Energieverluste verschiedener installierter Systeme sinnvoll nutzt, kann die an den Flügelvorderkanten 2 austretende Luft auch zum permanenten Erhöhen des Auftriebs bzw. zum Verschieben des Umschlagpunktes der laminaren Grenzschicht an der Flügeloberseite durch gezieltes Ausleiten von Luft an der Flügeloberseite verwendet werden. Dazu könnten weitere und in den Figuren nicht dargestellte Leitungen verwendet werden, die in einem besonders geeigneten Bereich der Flügeloberseite durch feinste Löcher Luft gezielt in die Flügelumströmung einleiten, so dass deren Energie insbesondere bei Start und Landung, aber auch während des Reiseflugs gesteigert wird. Dadurch können niedrigere Anstellwinkel der Flügel 16 und/oder günstigere Profile Verwendung finden, was zu einem niedrigeren Widerstand und damit einem niedrigeren Treibstoffverbrauch führt.

Bei der Notwendigkeit, eine große Luftmenge zur Enteisung bei niedrigem Temperaturniveau zu verwenden ist es auch denkbar, die gesamte oder zumindest einen Großteil der anfallenden Kabinenabluft in die Flügel 16 einzuleiten und dort durch nicht näher dargestellte Ventilanordnungen auf die Luftausleitungsmittel 23 und Ausflussventile 32 zu verteilen. Die Ausflussventile 32 (auch als "Outflow Valves" bekannt) sind dabei so zu positionieren, dass die austretende Kabinenabluft eine Vortriebswirkung auf das Flugzeug ausübt. Dies ist beispielsweise dann der Fall, wenn der Ausflussvektor entgegen der Flugrichtung verläuft, mit einer mehr oder weniger stark ausgeprägten vertikalen zum Boden gerichteten Komponente.

Insgesamt ist das erfindungsgemäße Enteisungssystem in der Lage, ohne zusätzlichen Energieaufwand eine Flügelenteisung bereitzustellen, die nicht nur eine Anti-Icing-Funktion, sondern auch eine De-Icing-Funktion am Boden ist. Vorteilhafterweise könnte die Funktion des erfindungsgemäßen Enteisungssystems dahingehend ergänzt werden, dass Kabinenabluft auch zur Erhöhung der Strömungsenergie an der Flügeloberseite genutzt werden kann, um einen Grenzschichtumschlag bzw. -ablösung hinauszuzögern und im allgemeinen den Auftrieb zu erhöhen oder den Widerstand zu senken.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen:

- 2: Flügelvorderkante
- 4: perforierte Rohrleitung (Piccolo Tube)
- 6: Innenseite Flügelvorderkante
- 8: Spalte
- 10: Dichtungspaarung
- 12: Leitungssystem
- 14: Zapflufteinleitungsstelle
- 16: Flügel
- 18: Crossbleed-Ventil
- 20: APU-Lufteinleitungsstelle
- 22: (Zufuhr-)Ventil
- 23: Luftausleitungsmittel
- 24: Leitungssystem
- 26: Klimaanlage
- 28: Wärmequelle
- 30: Lufterwärmungseinrichtung
- 32: Ausflussventil (Outflow-Valve)

## Patentansprüche

1. Enteisungssystem für ein Flugzeug, mit
- mindestens einer Wärmequelle (28),
- mindestens einem Luftausleitungsmittel (23) zum Ausleiten von Luft in zu enteisende Bereiche des Flugzeugs und
- mindestens eine Lufterwärmungseinrichtung (30),
**dadurch gekennzeichnet, dass** das Luftausleitungsmittel (23) direkt über die Lufterwärmungseinrichtung (30) mit einem Leitungssystem (24) verbunden ist, das Abluft aus einer Kabine des Flugzeugs bezieht, wobei die Lufterwärmungseinrichtung (30) zum Erwärmen der Abluft aus der Kabine des Flugzeugs Wärme der mindestens einen Wärmequelle (28) aufnimmt.

2. Enteisungssystem nach Anspruch 1,
**dadurch gekennzeichnet, dass** die mindestens eine Wärmequelle (28) eine im Flugzeug installierte Brennstoffzelle ist.

3. Enteisungssystem nach Anspruch 1,
**dadurch gekennzeichnet, dass** die mindestens eine Wärmequelle (28) ein im Flugzeug installiertes elektronisches Gerät ist.

4. Enteisungssystem nach Anspruch 3,
**dadurch gekennzeichnet, dass** das elektronische Gerät eine Recheneinheit ist.

5. Enteisungssystem nach einem der vorhergehenden Ansprüche,
**dadurch gekennzeichnet, dass** die mindestens eine Wärmequelle (28) eine Kombination aus mehreren verschiedenen oder gleichartigen Wärmequellen (28) ist.

6. Enteisungssystem nach einem der vorhergehenden Ansprüche,
**dadurch gekennzeichnet, dass** die Lufterwärmungseinrichtung (30) ein Wärmetauscher ist.

7. Enteisungssystem nach einem der vorhergehenden Ansprüche,
**dadurch gekennzeichnet, dass** an einem Ende mindestens eines Flügels (16) des Flugzeugs ein Luftausflussventil (32) zum Ausleiten von Abluft aus der Kabine des Flugzeugs angeordnet ist.

8. Enteisungssystem nach einem der vorhergehenden Ansprüche,
**dadurch gekennzeichnet, dass** das Enteisungssystem ferner Luftausleitungsmittel umfasst, die zum Ausleiten von Luft an die Oberseite der Flügel (16) des Flugzeugs zum Erhöhen des Auftriebs und/oder Verringern des aerodynamischen Widerstands eingerichtet sind.

9. Verfahren zum Enteisen eines Flugzeugs,
bei dem mindestens ein Luftausleitungsmittel (23) Luft in zu enteisende Bereiche des Flugzeugs ausleitet,
**dadurch gekennzeichnet, dass** das Luftausleitungsmittel (23) über eine Lufterwärmungseinrichtung (30) mit einem Leitungssystem (24) zum Ausleiten von Luft aus einer Kabine des Flugzeugs verbunden wird, wobei die Lufterwärmungseinrichtung (30) die Luft aus der Kabine des Flugzeugs mittels der mindestens einen Wärmequelle erwärmt.

10. Verwendung eines Enteisungssystems nach einem der Ansprüche 1-8 in einem Flugzeug.

11. Flugzeug mit einem Enteisungssystem, aufweisend:
- mindestens eine Wärmequelle (28),
- mindestens ein Luftausleitungsmittel (23) zum Ausleiten von Luft in zu enteisende Bereiche des Flugzeugs und
- mindestens eine Lufterwärmungseinrichtung (30),
**dadurch gekennzeichnet, dass** das Luftausleitungsmittel (23) direkt über die Lufterwärmungseinrichtung (30) mit einem Leitungssystem (24) verbunden ist, das Abluft aus einer Kabine des Flugzeugs bezieht, wobei die Lufterwärmungseinrichtung (30) zum Erwärmen der Abluft aus der Kabine des Flugzeugs Wärme der mindestens einen Wärmequelle (28) aufnimmt.

## Claims

1. A de-icing system for an aircraft with
- at least one heat source (28),
- at least one air delivery means (23) for delivering air into regions of the aircraft to be de-iced, and
- at least one air heating device (30),
**characterized in that** the air delivery means (23) is directly connected to a pipeline system (24) via the air heating device (30), the pipeline system (24) receiving air from the cabin of the aircraft, wherein the air heating device (30) receives heat from the at least one heat source (28) in order to heat the air from the cabin of the aircraft.

2. The de-icing system of claim 1,
**characterized in that** the at least one heat source (28) is a fuel cell installed in the aircraft.

3. The de-icing system of claim 1,
**characterized in that** the at least one heat source (28) is an electronic device installed in the aircraft.

4. The de-icing system of claim 3,
**characterized in that** the electronic device is a processing unit.

5. The de-icing system of one of the preceding claims,
**characterized in that** the at least one heat source (28) is a combination of several different or identical heat sources (28).

6. The de-icing system of one of the preceding claims,
**characterized in that** the air heating device (30) is a heat exchanger.

7. The de-icing system of one of the preceding claims,
**characterized in that** an air outflow valve (32) for discharging waste air from the cabin of the aircraft is arranged on an end of at least one wing (16) of the aircraft.

8. The de-icing system of one of the preceding claims,
**characterized in that** the de-icing system furthermore comprises air delivery means that are designed for discharging air on the upper side of the wing (16) of the aircraft in order to increase the lift and/or reduce the aerodynamic drag.

9. A method for de-icing an aircraft,
in which at least one air delivery means (23) discharges air into regions of the aircraft to be de-iced,
**characterized in that** the air delivery means (23) is connected to a pipeline system (24) for discharging air from the cabin of the aircraft via an air heating device (30), wherein the air heating device (30) heats the air from the cabin of the aircraft by means of the at least one heat source.

10. The use of a de-icing system of one of claims 1-8 in an aircraft.

11. An aircraft with a de-icing system comprising:
- at least one heat source (28),
- at least one air delivery means (23) for delivering air into regions of the aircraft to be de-iced, and
- at least one air heating device (30),
**characterized in that** the air delivery means (23) is directly connected to a pipeline system (24), the pipeline system (24) receiving air from the cabin of the aircraft via the air heating device (30), wherein the air heating device (30) receiving heat from the at least one heat source (28) in order to heat the air from the cabin of the aircraft.

## Revendications

1. Système de dégivrage pour un aéronef, comportant :
- au moins une source de chaleur (28),
- au moins un moyen d'acheminement d'air (23) pour acheminer de l'air dans des zones à dégivrer de l'aéronef et
- au moins un dispositif de réchauffement d'air (30),
**caractérisé en ce que** le moyen d'acheminement d'air (23) est relié directement par le dispositif de réchauffement d'air (30) à un système de conduite (24) qui prend l'air sortant d'une cabine de l'aéronef, le dispositif de réchauffement d'air (30) recevant de la chaleur de l'au moins une source de chaleur (28) pour réchauffer l'air sortant de la cabine de l'aéronef.

2. Système de dégivrage selon la revendication 1, **caractérisé en ce que** l'au moins une source de chaleur (28) est une pile à combustible installée dans l'aéronef.

3. Système de dégivrage selon la revendication 1, **caractérisé en ce que** l'au moins une source de chaleur (28) est un appareil électronique installé dans l'aéronef.

4. Système de dégivrage selon la revendication 3, **caractérisé en ce que** l'appareil électronique est un calculateur.

5. Système de dégivrage selon une des revendications précédentes, **caractérisé en ce que** l'au moins une source de chaleur (28) est une combinaison de plusieurs sources de chaleur (28) différentes ou similaires.

6. Système de dégivrage selon une des revendications précédentes, **caractérisé en ce que** le dispositif de réchauffement d'air (30) est un échangeur de chaleur.

7. Système de dégivrage selon une des revendications précédentes, **caractérisé en ce que**, à une extrémité d'au moins une aile (16) de l'aéronef, une soupape d'écoulement d'air (32) est disposée pour acheminer de l'air sortant de la cabine de l'aéronef.

8. Système de dégivrage selon une des revendications précédentes, **caractérisé en ce que** le système de dégivrage comprend en outre des moyens d'acheminement d'air agencés pour acheminer de l'air sur la face supérieure des ailes (16) de l'aéronef afin d'augmenter la portance et/ou de diminuer la résistance aérodynamique.

9. Procédé de dégivrage d'un aéronef, dans lequel au moins un moyen d'acheminement d'air (23) achemine de l'air dans des zones à dégivrer de l'aéronef, **caractérisé en ce que** le moyen d'acheminement d'air (23) est relié directement par un dispositif de réchauffement d'air (30) à un système de conduite (24) pour acheminer de l'air sortant d'une cabine de l'aéronef, le dispositif de réchauffement d'air (30) réchauffant l'air sortant de la cabine de l'aéronef au moyen de l'au moins une source de chaleur.

10. Utilisation d'un système de dégivrage selon une des revendications 1 à 8 dans un aéronef.

11. Aéronef comprenant un système de dégivrage, présentant :
- au moins une source de chaleur (28),
- au moins un moyen d'acheminement d'air (23) pour acheminer de l'air dans des zones à dégivrer de l'aéronef et
- au moins un dispositif de réchauffement d'air (30),
**caractérisé en ce que** le moyen d'acheminement d'air (23) est relié directement par le dispositif de réchauffement d'air (30) à un système de conduite (24) qui prend l'air sortant d'une cabine de l'aéronef, le dispositif de réchauffement d'air (30) recevant de la chaleur de l'au moins une source de chaleur (28) pour réchauffer l'air sortant de la cabine de l'aéronef.
